# EUROPEAN PATENT APPLICATION

(11) **EP 1 519 344 A1**
(43) Date of publication of application: **30.03.2005**
(21) Application number: 03078043.1
(22) Date of filing: 29.09.2003
(51) Int. Cl.: G09B 19/00, A46B 15/00

(54) **Device for teaching correct toothbrushing times**

(71) Applicant: Chiu, Gerard Jorge, 1017 DK Amsterdam (NL); Wulff, Julia-Katharina, 69126 Heidelberg (DE)
(72) Inventor: Chiu, Gerard Jorge, 1017 DK Amsterdam (NL); Wulff, Julia-Katharina, 69126 Heidelberg (DE)
(74) Representative: Land, Addick Adrianus Gosling

(57) **Abstract**

The present invention concerns a device for brushing teeth, comprising:
- a housing;
- a toothbrush arranged releasably on the housing;
- detection means arranged in or on the housing for detecting the absence or presence of the toothbrush;
- counter means which are coupled to the detection means for recording at least one time duration; and
- signalling means which are coupled to the counter means for providing predetermined signals subject to the time duration recorded.

## Description

The present invention relates to a device for brushing teeth, a toothbrush and to a method for manufacture thereof.

The present invention is directed at teaching the correct method of brushing teeth, i.e. at least twice a day and always for at least two minutes. This is particularly important for children since, when they are older, they will continue to brush their teeth in the way they learned at a young age.

Known devices are holders for toothbrushes in the form of comic characters. A child will hereby take greater pleasure in holding the toothbrush. The brushing method will however stay the same, the holder is passive.

The present invention has for its object to provide a device which teaches in active manner a correct method of brushing teeth.

The invention provides for this purpose a device for brushing teeth, comprising:
- a housing;
- a toothbrush arranged releasably on the housing;
- detection means arranged in or on the housing for detecting the absence or presence of the toothbrush;
- counter means which are coupled to the detection means for recording at least one time duration; and
- signalling means which are coupled to the counter means for providing predetermined signals subject to the time duration recorded.

The device according to the invention stimulates in educational and motivational manner a correct method of brushing teeth. The device is therefore very suitable for children in particular, since they are already taught a correct method of brushing teeth at a relatively young age. The signalling means inform a user about the correct use of the device.

In a preferred embodiment the counter means provide a first signal when the time duration of absence of the toothbrush is at least two minutes. Two minutes is the recommended minimum time duration for brushing teeth.

In a further preferred embodiment the signalling means are coupled to a loudspeaker. The loudspeaker can produce corrective or complimentary sounds, for instance when brushing is too short or, conversely, when it has been long enough.

In a further preferred embodiment the signalling means are coupled to a number of, preferably seven, lamps or LEDs. The lamps correspond to the days of the week, and will come on when brushing has taken place correctly on the relevant day.

In a further preferred embodiment the signalling means are coupled to vibration means. The vibration means can produce vibrations when brushing has taken place correctly.

In a preferred embodiment the detection means comprise one or more arms which at one end are arranged rotatably on the housing and which at the other end are suitable for holding the toothbrush. The detection means will record each occasion the toothbrush is used, so that it is possible to monitor whether the user has brushed his or her teeth often enough and long enough.

In a preferred embodiment the housing takes the form of a molar on which is arranged a face with eyes, a nose and a mouth. This embodiment is particularly suitable for children, wherein it is important that the device inspires confidence. The face is male or female depending on the preference of the user.

In yet another preferred embodiment the device comprises a battery coupled to the signalling means. This constitutes less danger to the user than a connection to the mains electricity.

In a further preferred embodiment the toothbrush can be coupled magnetically to the housing. This simplifies detection and prevents the toothbrush falling on the ground.

According to a further aspect, the present invention provides a toothbrush evidently suitable for use with a device as described above.

According to yet another aspect, the present invention provides a method for manufacturing a device as according to any of the claims 1-11 or for a toothbrush as according to claim 12.

Further advantages and features are described with reference to the annexed figure, which shows a device and a toothbrush according to the invention in a first preferred embodiment.

A device 1 for brushing teeth according to the present invention comprises a housing 2, which in the shown preferred embodiment takes the form of a molar. On the housing is arranged a face with eyes 3, a nose 4 and a mouth 5. A user can choose between a male or a female face depending on his or her preference. The face is arranged so as to give the housing a friendlier appearance. The arms 6, 7 are arranged rotatably on either side of the housing. The arms, which end in hands 8, 9, are suitable for holding in for instance magnetic or clamping manner a toothbrush 10 which is provided on one outer end with brush head 11. Lamps 12 are arranged at the top on the front side of housing 2. In the shown preferred embodiment the lamps 12 are seven LEDs representing the days of the week. Arranged on the side of the housing are openings 13 behind which is situated a loudspeaker (not shown) coupled to electronics located in the housing. The electronics comprise for instance counter means and signalling means, comprising a processor and a memory. Arranged on the rear of the housing is a suction cup 14 which is indicated with dotted lines and with which the housing can be arranged against a wall or a mirror.

The above described preferred embodiment of a device according to the invention is only intended by way of example. It is possible to envisage many external forms which can realize the object of the invention as described hereinbelow. The above described device is created as educational and motivational toy for teaching and sustaining good oral care. The device is herein directed particularly at children so as to already teach them at a young age to brush their teeth twice a day for a period of at least two minutes, as recommended by among others the American Dental health Association.

The above described embodiment of the housing in the form of a molar is preferably embodied in plastic, with a height of about 30 cm (12 inches). If desired, the external form can be personally adapted by each user in accordance with his/her own wishes. Arranged inside the housing are electronics powered by batteries and coupled to lamps 12, loudspeaker 13 and arms 6, 7. When a user takes toothbrush 10 from arms 6, 7, this will be recorded, for instance by an electrical or mechanical detector, whereupon a counter in the electronics will begin to run. During running of the counter a song will for instance be heard from loudspeaker 13, which song teaches for instance step by step how the user must brush his or her teeth. The duration of the song corresponds with the above stated period of two minutes. If the toothbrush is re-placed on arms 6, 7 before the period of two minutes has elapsed, the electronics will record this and emit a warning message via the loudspeaker that the user should continue with brushing. Conversely, if the toothbrush is re-placed after the period of two minutes has elapsed, a positive complimentary message will be emitted, for instance that the user did a great job, helping the user, i.e. the child, feel confident and start his or her day in a positive frame of mind. The compliment is louder than the song, so that for instance the parents know that the child has finished brushing. The compliment can be supplemented with an inspirational message, which can be religious as well as non-religious, as a thought for the rest of the day, giving the child a positive and character-building mental attitude. The above stated messages are preferably in the native language of the user and therefore differ per country.

Lamps 12 correspond to the seven days of the week and will light up when the user has brushed his or her teeth at least twice in one day for a period of more than two minutes. The lamps will come on at the end of each day. The device further indicates that the toothbrush should be replaced after a predetermined period of for instance two weeks. It is also possible here to replace only the brush head 11 and not the whole toothbrush 10.

A toothbrush 10 which is suitable for the above described device preferably comprises a magnetic or magnetizable portion for arranging the toothbrush on arms 6, 7. Arms 6, 7 herein likewise need to have a magnetizable or magnetic portion. It hereby also becomes possible to activate and/or deactivate arms 6, 7 in electrical manner with toothbrush 10. The specially suitable toothbrushes will be sold in packs of for instance three toothbrushes. Each pack will therefore last six weeks.

The invention is not limited to the above described preferred embodiment thereof, many modifications of which are possible. The scope of protection is defined by the following claims.

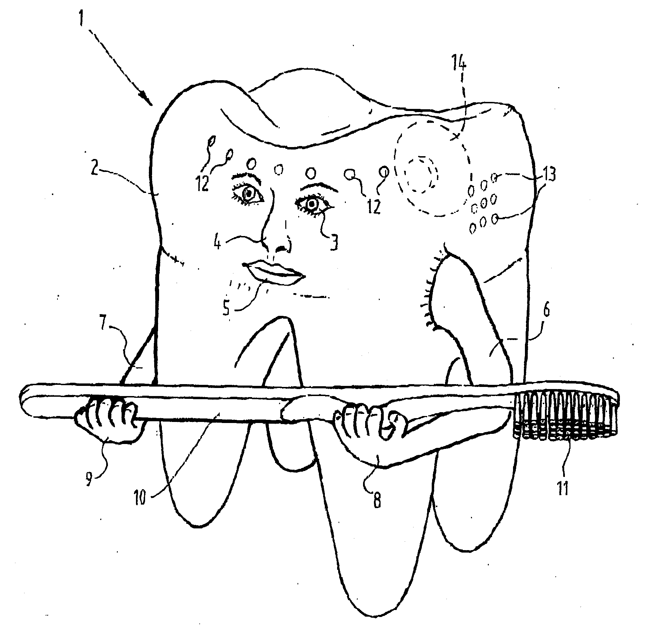

## Claims

1. Device for brushing teeth, comprising:
- a housing;
- a toothbrush arranged releasably on the housing;
- detection means arranged in or on the housing for detecting the absence or presence of the toothbrush;
- counter means which are coupled to the detection means for recording at least one time duration; and
- signalling means which are coupled to the counter means for providing predetermined signals subject to the time duration recorded.

2. Device as claimed in claim 1, wherein the counter means record at least a first time duration, corresponding to the time of absence of the toothbrush.

3. Device according to claim 2, wherein the counter means provide a first signal to the signalling means when the first time duration is longer than two minutes.

4. Device as claimed in claim 3, wherein the signalling means are coupled to a loudspeaker.

5. Device as claimed in claim 3 or 4, wherein the signalling means are coupled to a number of, preferably seven, lamps or LEDs.

6. Device as claimed in claim 3, 4 or 5, wherein the signalling means are coupled to vibration means.

7. Device as claimed in any of claims 3-6, wherein the signalling means comprise a memory.

8. Device as claimed in any of the foregoing claims, wherein the detection means comprise one or more arms, which at one end are arranged rotatably on the housing and which at the other end are suitable for holding the toothbrush.

9. Device as claimed in any of the foregoing claims, wherein the housing take the form of a molar on which is arranged a face with eyes, a nose and a mouth.

10. Device as claimed in any of the foregoing claims, comprising a battery coupled to the signalling means.

11. Device as claimed in any of the foregoing claims, wherein the toothbrush can be coupled magnetically to the housing.

12. Toothbrush evidently suitable for use with a device as claimed in any of the claims 1-8.

13. Method for manufacturing a device as claimed in any of the claims 1-11 or for a toothbrush as claimed in claim 12.
